(19) Europäisches Patentamt
European Patent Office
Office européen des brevets

(11) EP 3 523 370 B1

(12) EUROPEAN PATENT SPECIFICATION

(45) Date of publication and mention of the grant of the patent:
**21.10.2020 Bulletin 2020/43**

(21) Application number: **17768819.9**

(22) Date of filing: **22.09.2017**

(51) Int Cl.:
***C08L 23/20*** *(2006.01)*

(86) International application number:
**PCT/EP2017/074120**

(87) International publication number:
**WO 2018/065242 (12.04.2018 Gazette 2018/15)**

# (54) PROPYLENE-BASED COMPOSITION FOR PIPES

PROPYLENBASIERTE ZUSAMMENSETZUNG FÜR ROHRE

COMPOSITION À BASE DE PROPYLÈNE POUR TUBES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.10.2016 EP 16192533**

(43) Date of publication of application:
**14.08.2019 Bulletin 2019/33**

(73) Proprietor: **Basell Poliolefine Italia S.r.l.**
**20121 Milano (IT)**

(72) Inventors:
- **GALVAN, Monica**
**44122 Ferrara (IT)**
- **CAVALIERI, Claudio**
**44122 Ferrara (IT)**
- **TISI, Francesca**
**44122 Ferrara (IT)**
- **PELLEGATTI, Giampaolo**
**44122 Ferrara (IT)**
- **BÖHM, Thomas**
**64291 Darmstadt (DE)**

(74) Representative: **LyondellBasell**
**c/o Basell Poliolefine Italia**
**Intellectual Property**
**P.le Donegani 12**
**44122 Ferrara (IT)**

(56) References cited:
**WO-A1-2008/077773**
**WO-A1-2011/160953**
**WO-A1-2013/083617**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 523 370 B1

## Description

FIELD OF THE INVENTION

The present disclosure relates to a composition comprising a propylene/1-hexene copolymer and an heterophasic propylene ethylene copolymer particularly fit for the production of pipes especially for high pressure pipes.

BACKGROUND OF THE INVENTION

Pipes comprising propylene and 1-hexene terpolymers are already known in the art. WO 2013/083617 relates to a polyolefin composition comprising from 85 wt% to 99.5 wt % of a propylene ethylene 1-hexene terpolymers and an heterophasic copolymer. This composition is particularly fit for the production of small diameter pipes having improved impact properties especially at low temperature.

SUMMARY OF THE INVENTION

The applicant found it is possible to obtain pipes having improved stress resistance specially at high pressure with a composition comprising a propylene 1-hexene copolymer having certain features and an heterophasic propylene ethylene copolymer. Thus an object of the present disclosure is a polyolefin composition comprising:

A) from 85.0 wt% to 99.5 wt% of a propylene 1-hexene copolymer wherein:

i) the content of 1-hexene derived units ranges from 0.6 wt% to 6.0 wt %;
ii) the melt flow rate (MFR) (ISO 1133 230°C, 5 kg) ranges from 0.6 to 5.0 g/10 min;
iii) the xylene soluble content measured at 25°C lower than 10 wt%; preferably lower than 8 wt% ; more preferably lower than 5 wt%;

B) from 0.5 wt% to 15.0 wt% of a propylene, ethylene copolymer composition comprising:

b1) from 12 wt% to 52 wt% of a propylene homopolymer or a propylene/ethylene copolymer having a content of ethylene derived units ranging from 0.1 wt% to 4.5 wt%; and having a xylene soluble content measured at 25°C lower than 10 wt%;
b2) from 48 wt% to 88 wt% of a propylene ethylene copolymer having a content of ethylene derived units ranging from 15 wt% to 42 wt%;
wherein the resulting polyolefin composition has an melt flow rate (230°C/5 kg.. ISO 1133) ranging from 0.2 g/10min to 4.0 g/10min;
the sum of the amount of components A+B being 100 and the sum of the amount of components b1+b2 being 100.

DETAILED DESCRIPTION OF THE INVENTION

The applicant found it is possible to obtain pipes having improved stress resistance specially at high pressure with a composition comprising a propylene 1-hexene copolymer having certain features and an heterophasic propylene ethylene copolymer. Thus an object of the present disclosure is a polyolefin composition comprising:

A) from 85.0 wt% to 99.5 wt%; preferably 90.0 wt% to 99.5 wt% more preferably from 99.5 wt% to 93.0 wt% ; even more preferably from 96.5 wt% to 94.0 wt% of a propylene 1-hexene copolymer wherein:

i) the content of 1-hexene derived units ranges from 0.6 wt% to 6.0 wt %;
ii) the melt flow rate (MFR) (ISO 1133 230°C, 5 kg) ranges from 0.6 to 5.0 g/10 min; preferably from 0.9 to 2.5 g/10 min;
iii) the xylene soluble content measured at 25°C lower than 10 wt%; preferably lower than 8 wt% ; more preferably lower than 5 wt%;

B) from 0.5 wt% to 15.0 wt%; preferably from 0.5 wt% to 10.0 wt%; more preferably from 0.5 wt% to 7.0 wt% even more preferably from 3.5 wt% to 6.0 wt% of a propylene, ethylene copolymer composition comprising:

b1) from 12 wt% to 52 wt%; preferably from 15 wt% to 43 wt%; more preferably from 20 wt% to 33 wt% of a propylene homopolymer or a propylene/ethylene copolymer having a content of ethylene derived units ranging

from 0.1 wt% to 4.5 wt%; and having a xylene soluble content measured at 25°C lower than 10 wt%; preferably lower than 8 wt% ; more preferably lower than 7 wt%;

b2) from 48 wt% to 88 wt% preferably from 57 wt% to 85 wt%; more preferably from 67 wt% to 80 wt% of a propylene ethylene copolymer having a content of ethylene derived units ranging from 15 wt% to wt% to 42 wt%; wherein the resulting polyolefin composition has an melt flow rate (230°C/5 kg.. ISO 1133) ranging from 0.2 g/10min to 4.0 g/10min; preferably from 0.4 g/10min to 3.0 g/10min; more preferably from 0.5 g/10 min to 2 g/10min; the sum A+B being 100 and the sum b1+b2 being 100.

Preferably the component A) is endowed with one or more of these features:

(i) the content of 1-hexene derived units ranges from 1.0 wt% to 4.5 wt%; preferably from 1.1 wt% to 4.1 wt %; more preferably from 2.5 wt% to 3.9 wt%; even more preferably from 2.8 wt% to 3.7wt%;

(ii) the melting temperature (DSC) ranging from 155° C to 130° C; preferably from 150°C to 136°C.

(iii) a polydispersity index (PI) ranging from 2.0 to 7.0, preferably from 3.0 to 6.5, more preferably from 3.5 to 6.0.

In the component B) component b1) is preferably a propylene homopolymer or a propylene ethylene copolymer having an content of ethylene derived units ranging from 1.1 wt% wt% to 4.2 wt%; more preferably from 2.3 wt% to 3.9 wt%; more preferably is a propylene homopolymer.

In the component B) component b2) is preferably a propylene ethylene copolymer having an content of ethylene derived units ranging from 18 wt% to 38 wt% ; preferably from 21 wt% to 34 wt%, more preferably from 23 wt% to 31 wt%; said copolymer having an intrinsic viscosity of the xylene soluble fraction at 25°C ranging from 2.0 dl/g to 5.0 dl/g; preferably from 2.5 dl/g to 4.5 dl/g.

The term copolymer used herein means that the polymer contains only two type of monomers such as propylene/ethylene or propylene/1-hexene.

With the composition of the present disclosure it is possible to obtain pipes, in particular pipes fit to be used even under pressure and high temperature.

Thus a further object of the present disclosure is a pipe comprising the composition of the present disclosure.

The term "pipe" as used herein also includes pipe fittings, valves and all parts which are commonly necessary for e.g. a hot water piping system. Also included within the definition are single and multilayer pipes, where for example one or more of the layers is a metal layer and which may include an adhesive layer.

Such articles can be manufactured through a variety of industrial processes well known in the art, such as for instance moulding, extrusion, and the like.

In a further embodiment of the disclosure, the composition of the present disclosure further comprises an inorganic filler agent in an amount ranging from 0.5 to 60 parts by weight with respect to 100 parts by weight of the said composition. Typical examples of such filler agents are calcium carbonate, barium sulphate, titanium bioxide and talc. Talc and calcium carbonate are preferred. A number of filler agents can also have a nucleating effect, such as talc that is also a nucleating agent. The amount of a nucleating agent is typically from 0.2 to 5 wt% with respect to the polymer amount.

The composition of the disclosure is also suitable for providing pipes with walls of any configuration other than those with smooth inner and outer surface. Examples are pipes with a sandwich-like pipe wall, pipes with a hollow wall construction with longitudinally extending cavities, pipes with a hollow wall construction with spiral cavities, pipes with a smooth inner surface and a compact or hollow, spirally shaped, or an annularly ribbed outer surface, independently of the configuration of the respective pipe ends.

Articles, pressure pipes and related fittings according to the present disclosure are produced in a manner known per se, e.g. by (co-)extrusion or moulding, for instance.

Extrusion of articles can be made with different type of extruders for polyolefin, e.g. single or twin screw extruders.

The composition of the present disclosure can be prepared by blending the various components A), b1) and b2) or by preparing component A) and blend this component with component B) prepared in a single polymerization process by sequential polymerization steps.

The polymerization of A) and B) can be carried out in the presence of Ziegler-Natta catalysts. An essential component of said catalysts is a solid catalyst component comprising a titanium compound having at least one titanium-halogen bond, and an electron-donor compound, both supported on a magnesium halide in active form. Another essential component (co-catalyst) is an organoaluminium compound, such as an aluminium alkyl compound.

An external donor is optionally added.

The catalysts generally used in the process of the disclosure are capable of producing polypropylene with a value of xylene insolubility at ambient temperature greater than 90%, preferably greater than 95%.

Catalysts having the above mentioned characteristics are well known in the patent literature; particularly advantageous are the catalysts described in US patent 4,399,054 and European patent 45977. Other examples can be

found in US patent 4,472,524.

The solid catalyst components used in said catalysts comprise, as electron-donors (internal donors), compounds selected from the group consisting of ethers, ketones, lactones, compounds containing N, P and/or S atoms, and esters of mono- and dicarboxylic acids.

Particularly suitable electron-donor compounds are esters of phtalic acid and 1,3-diethers of formula:

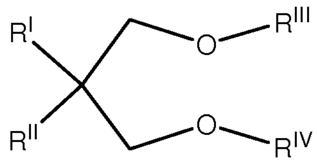

wherein $R^1$ and $R^{11}$ are the same or different and are $C_1$-$C_{18}$ alkyl, $C_3$-$C_{18}$ cycloalkyl or $C_7$-$C_{18}$ aryl radicals; $R^{III}$ and $R^{IV}$ are the same or different and are $C_1$-$C_4$ alkyl radicals; or are the 1,3-diethers in which the carbon atom in position 2 belongs to a cyclic or polycyclic structure made up of 5, 6, or 7 carbon atoms, or of 5-n or 6-n' carbon atoms, and respectively n nitrogen atoms and n' heteroatoms selected from the group consisting of N, O, S and Si, where n is 1 or 2 and n' is 1, 2, or 3, said structure containing two or three unsaturations (cyclopolyenic structure), and optionally being condensed with other cyclic structures, or substituted with one or more substituents selected from the group consisting of linear or branched alkyl radicals; cycloalkyl, aryl, aralkyl, alkaryl radicals and halogens, or being condensed with other cyclic structures and substituted with one or more of the above mentioned substituents that can also be bonded to the condensed cyclic structures; one or more of the above mentioned alkyl, cycloalkyl, aryl, aralkyl, or alkaryl radicals and the condensed cyclic structures optionally containing one or more heteroatom(s) as substitutes for carbon or hydrogen atoms, or both.

Ethers of this type are described in published European patent applications 361493 and 728769.

Representative examples of said diethers are 2-methyl-2-isopropyl-1,3-dimethoxypropane, 2,2-diisobutyl-1,3-dimethoxypropane, 2-isopropyl-2-cyclopentyl-1,3-dimethoxypropane, 2-isopropyl-2-isoamyl-1,3-dimethoxypropane, 9,9-bis (methoxymethyl) fluorene.

Other suitable electron-donor compounds are phthalic acid esters, such as diisobutyl, dioctyl, diphenyl and benzylbutyl phthalate.

The preparation of the above mentioned catalyst component is carried out according to various methods.

For example, a $MgCl_2 \cdot nROH$ adduct (in particular in the form of spheroidal particles) wherein n is generally from 1 to 3 and ROH is ethanol, butanol or isobutanol, is reacted with an excess of $TiCl_4$ containing the electron-donor compound. The reaction temperature is generally from 80 to 120° C. The solid is then isolated and reacted once more with $TiCl_4$, in the presence or absence of the electron-donor compound, after which it is separated and washed with aliquots of a hydrocarbon until all chlorine ions have disappeared.

In the solid catalyst component the titanium compound, expressed as Ti, is generally present in an amount from 0.5 to 10% by weight. The quantity of electron-donor compound which remains fixed on the solid catalyst component generally is 5 to 20% by moles with respect to the magnesium dihalide.

The titanium compounds, which can be used for the preparation of the solid catalyst component, are the halides and the halogen alcoholates of titanium. Titanium tetrachloride is the preferred compound.

The reactions described above result in the formation of a magnesium halide in active form. Other reactions are known in the literature, which cause the formation of magnesium halide in active form starting from magnesium compounds other than halides, such as magnesium carboxylates.

The Al-alkyl compounds used as co-catalysts comprise the Al-trialkyls, such as Al-triethyl, Al-triisobutyl, Al-tri-n-butyl, and linear or cyclic Al-alkyl compounds containing two or more Al atoms bonded to each other by way of O or N atoms, or $SO_4$ or $SO_3$ groups.

The Al-alkyl compound is generally used in such a quantity that the Al/Ti ratio be from 1 to 1000.

The electron-donor compounds that can be used as external donors include aromatic acid esters such as alkyl benzoates, and in particular silicon compounds containing at least one Si-OR bond, where R is a hydrocarbon radical.

Examples of silicon compounds are (tert-butyl)$_2$Si(OCH$_3$)$_2$, (cyclohexyl)(methyl)Si (OCH$_3$)$_2$, (cyclopentyl)$_2$Si(OCH$_3$)$_2$ and (phenyl)$_2$Si(OCH$_3$)$_2$ and (1,1,2-trimethylpropyl)Si(OCH$_3$)$_3$.

1,3-diethers having the formulae described above can also be used advantageously. If the internal donor is one of these diethers, the external donors can be omitted.

In particular, even if many other combinations of the previously said catalyst components may allow to obtain compositions according to the present disclosure, the components A) and B) are preferably prepared by using catalysts containing a phthalate as internal donor and (cyclopentyl)$_2$Si(OCH$_3$)$_2$ as outside donor, or the said 1,3-diethers as internal donors.

Component A) is produced with a polymerization process illustrated in EP application 1 012 195.

In detail, the said process comprises feeding the monomers to said polymerisation zones in the presence of catalyst under reaction conditions and collecting the polymer product from the said polymerisation zones. In the said process the growing polymer particles flow upward through one (first) of the said polymerisation zones (riser) under fast fluidisation conditions, leave the said riser and enter another (second) polymerisation zone (downcomer) through which they flow downward in a densified form under the action of gravity, leave the said downcomer and are reintroduced into the riser, thus establishing a circulation of polymer between the riser and the downcomer.

In the downcomer high values of density of the solid are reached, which approach the bulk density of the polymer. A positive gain in pressure can thus be obtained along the direction of flow, so that it become possible to reintroduce the polymer into the riser without the help of special mechanical means. In this way, a "loop" circulation is set up, which is defined by the balance of pressures between the two polymerisation zones and by the head loss introduced into the system.

Generally, the condition of fast fluidization in the riser is established by feeding a gas mixture comprising the relevant monomers to the said riser. It is preferable that the feeding of the gas mixture is effected below the point of reintroduction of the polymer into the said riser by the use, where appropriate, of gas distributor means. The velocity of transport gas into the riser is higher than the transport velocity under the operating conditions, preferably from 2 to 15 m/s.

Generally, the polymer and the gaseous mixture leaving the riser are conveyed to a solid/gas separation zone. The solid/gas separation can be effected by using conventional separation means. From the separation zone, the polymer enters the downcomer. The gaseous mixture leaving the separation zone is compressed, cooled and transferred, if appropriate with the addition of make-up monomers and/or molecular weight regulators, to the riser. The transfer can be effected by means of a recycle line for the gaseous mixture.

The control of the polymer circulating between the two polymerisation zones can be effected by metering the amount of polymer leaving the downcomer using means suitable for controlling the flow of solids, such as mechanical valves.

The operating parameters, such as the temperature, are those that are usual in olefin polymerisation process, for example between 50 to 120° C.

This first stage process can be carried out under operating pressures of between 0.5 and 10 MPa, preferably between 1.5 to 6 MPa.

Advantageously, one or more inert gases are maintained in the polymerisation zones, in such quantities that the sum of the partial pressure of the inert gases is preferably between 5 and 80% of the total pressure of the gases. The inert gas can be nitrogen or propane, for example.

The various catalysts are fed up to the riser at any point of the said riser. However, they can also be fed at any point of the downcomer. The catalyst can be in any physical state, therefore catalysts in either solid or liquid state can be used.

The following examples are given to illustrate the present disclosure without limiting purpose.

EXAMPLES

**Characterization methods**

Melting temperature and crystallization temperature: Determined by differential scanning calorimetry (DSC). weighting 6 ±1 mg, is heated to 220 ±1° C at a rate of 20 °C/min and kept at 220 ±1° C for 2 minutes in nitrogen stream and it is thereafter cooled at a rate of 20° C/min to 40 ±2° C, thereby kept at this temperature for 2 min to crystallise the sample. Then, the sample is again fused at a temperature rise rate of 20° C/min up to 220° C ±1. The melting scan is recorded, a thermogram is obtained, and, from this, melting temperatures and crystallization temperatures are read.

Melt Flow Rate: Determined according to the method ISO 1133 (230° C, 5 kg).

Solubility in xylene: Determined as follows.

2.5 g of polymer and 250 ml of xylene are introduced in a glass flask equipped with a refrigerator and a magnetical stirrer. The temperature is raised in 30 minutes up to the boiling point of the solvent. The so obtained clear solution is then kept under reflux and stirring for further 30 minutes. The closed flask is then kept for 30 minutes in a bath of ice and water and in thermostatic water bath at 25° C for 30 minutes as well. The so formed solid is filtered on quick filtering paper. 100 ml of the filtered liquid is poured in a previously weighed aluminium container, which is heated on a heating plate under nitrogen flow, to remove the solvent by evaporation. The container is then kept on an oven at 80° C under vacuum until constant weight is obtained. The weight percentage of polymer soluble in xylene at room temperature is then calculated.

Determination of 1-hexene content by NMR

$^{13}C$ NMR spectra are acquired on an AV-600 spectrometer operating at 150.91 MHz in the Fourier transform mode at 120 °C. The peak of the propylene CH was used as internal reference at 28.83. The $^{13}C$ NMR spectrum is acquired using the following parameters:

| | |
|---|---|
| Spectral width (SW) | 60 ppm |
| Spectrum centre (O1) | 30 ppm |
| Decoupling sequence | WALTZ 65_64pl |
| Pulse program | ZGPG |
| Pulse Length (P1) | for 90° |
| Total number of points (TD) | 32K |
| Relaxation Delay | 15 s |
| Number of transients | 1500 |

The total amount of 1-hexene as molar percent is calculated from diad using the following relations:

$$[P] = PP + 0.5PH$$

$$[H] = HH + 0.5PH$$

Assignments of the $^{13}C$ NMR spectrum of propylene/1-hexene copolymers have been calculated according to the following table:

| Area | Chemical Shift | Assignments | Sequence |
|---|---|---|---|
| 1 | 46.93 - 46.00 | $S_{\alpha\alpha}$ | PP |
| 2 | 44.50 - 43.82 | $S_{\alpha\alpha}$ | PH |
| 3 | 41.34 -4.23 | $S_{\alpha\alpha}$ | HH |
| 4 | 38.00 - 37.40 | $S_{\alpha\gamma}$+ $s_{\alpha\delta}$ | PE |
| 5 | 35.70 -35.0 | $4B_4$ | H |
| 6 | 35.00 - 34.53 | $S_{\alpha\gamma}$+ $S_{\alpha\delta}$ | HE |
| 7 | 33.75 33.20 | CH | H |
| 8 | 33.24 | $T_{\delta\delta}$ | EPE |
| 9 | 30.92 | $T_{\beta\delta}$ | PPE |
| 10 | 30.76 | $S_{\gamma\gamma}$ | XEEX |
| 11 | 30.35 | $S_{\gamma\delta}$ | XEEE |
| 12 | 29.95 | $S_{\delta\delta}$ | EEE |
| 13 | 29.35 | $3B_4$ | H |
| 14 | 28.94 - 28.38 | CH | P |
| 15 | 27.43 - 27.27 | $S_{\beta\delta}$ | XEE |
| 16 | 24.67 -24.53 | $S_{\beta\beta}$ | XEX |
| 17 | 23.44 -23.35 | $2B_4$ | H |
| 18 | 21.80 - 19.90 | $CH_3$ | P |

(continued)

| Area | Chemical Shift | Assignments | Sequence |
|---|---|---|---|
| 19 | 14.22 | $CH_3$ | H |

**Ethylene (C2) content**

**$^{13}C$ NMR of propylene/ethylene copolymers**

$^{13}C$ NMR spectra were acquired on a Bruker AV-600 spectrometer equipped with cryoprobe, operating at 160.91 MHz in the Fourier transform mode at 120°C.

The peak of the $S_{\beta\beta}$ carbon (nomenclature according to "Monomer Sequence Distribution in Ethylene-Propylene Rubber Measured by 13C NMR. 3. Use of Reaction Probability Mode " C. J. Carman, R. A. Harrington and C. E. Wilkes, Macromolecules, 1977, 10, 536) was used as internal reference at 29.9 ppm. The samples were dissolved in 1,1,2,2-tetrachloroethane-d2 at 120°C with a 8 % wt/v concentration. Each spectrum was acquired with a 90° pulse, 15 seconds of delay between pulses and CPD to remove 1H-13C coupling. 512 transients were stored in 32K data points using a spectral window of 9000 Hz.

The assignments of the spectra, the evaluation of triad distribution and the composition were made according to Kakugo ("Carbon-13 NMR determination of monomer sequence distribution in ethylene-propylene copolymers prepared with δ-titanium trichloride-diethylaluminum chloride" M. Kakugo, Y. Naito, K. Mizunuma and T. Miyatake, Macromolecules, 1982, 15, 1150) using the following equations:

$$PPP = 100\ T_{\beta\beta}/S \quad PPE = 100\ T_{\beta\delta}/S \quad EPE = 100\ T_{\delta\delta}/S$$
$$PEP = 100\ S_{\beta\beta}/S \quad PEE = 100\ S_{\beta\delta}/S \quad EEE = 100\ (0.25\ S_{\gamma\delta} + 0.5\ S_{\delta\delta})/S$$

$$S = T_{\beta\beta} + T_{\beta\delta} + T_{\delta\delta} + S_{\beta\beta} + S_{\beta\delta} + 0.25\ S_{\gamma\delta} + 0.5\ S_{\delta\delta}$$

The molar percentage of ethylene content was evaluated using the following equation:

$$E\%\ mol = 100 * [PEP+PEE+EEE]$$ The weight percentage of ethylene content was

The weight percentage of ethylene content was evaluated using the following equation:

$$E\%\ wt. = \frac{100 * E\%\ mol * MW_E}{E\%\ mol * MW_E + P\%\ mol * MW_P}$$

where P% mol is the molar percentage of propylene content, while $MW_E$ and MWp are the molecular weights of ethylene and propylene, respectively.

The product of reactivity ratio $r_1 r_2$ was calculated according to Carman (C.J. Carman, R.A. Harrington and C.E. Wilkes, Macromolecules, **1977;** *10*, 536) as:

$$r_1 r_2 = 1 + \left(\frac{EEE+PEE}{PEP}+1\right) - \left(\frac{P}{E}+1\right)\left(\frac{EEE+PEE}{PEP}+1\right)^{0.5}$$

The tacticity of Propylene sequences was calculated as mm content from the ratio of the PPP $mmT_{\beta\beta}$ (28.90-29.65 ppm) and the whole $T_{\beta\beta}$ (29.80-28.37 ppm).

Ethylene C2 content of component b2 has been measured by measuring the C2 content on component B) and than calculated by using the formula C2tot=Xb1C2b1+Xb2C2b2 wherein Xb1 and Xb2 are the amounts of components b1 and b2 in the composition.

Elongation at yield: measured according to ISO 527.

Elongation at break: measured according To ISO 527

Stress at break: measured according to ISO 527.

Impact test: ISO 180-1A

Samples for the mechanical analysis

Samples have been obtained according to ISO 1873-2:2007 excepting for the flexural modulus for which ISO 3167 has been used.

Flexural Modulus

Determined according to ISO 178.

**Preparation of component A1**

Copolymers are prepared by polymerising propylene and hexene-1 in the presence of a catalyst under continuous conditions in a plant comprising a polymerisation apparatus as described in EP 1 012 195.

The catalyst is sent to the polymerisation apparatus that comprises two interconnected cylindrical reactors, riser and downcomer. Fast fluidisation conditions are established in the riser by recycling gas from the gas-solid separator. In examples 1-5 barrier feed has been used.

The catalyst employed comprises a catalyst component prepared by analogy with example 5 of EP-A-728 769 but using microspheroidal $MgCl_2{\cdot}1.7C_2H_5OH$ instead of $MgCl_2{\cdot}2.1C_2H_5OH$. Such catalyst component is used with dicyclopentyl dimethoxy silane (DCPMS) as external donor and with triethylaluminium (TEA).

The polymer particles exiting the reactor are subjected to a steam treatment to remove the reactive monomers and volatile substances and then dried. The main operative conditions and characteristics of the produced polymers are indicated in Table 1.

Table 1

| component | | A) |
|---|---|---|
| TEA/solid catalyst component, | g/g | 6 |
| TEA/DCPMS, | g/g | 4 |
| Temperature | °C | 70 |
| $C_6/(C_3+C_6)$, mol/mol | Riser | 0.06 |
| $C_6/(C_3+C_6)$, mol/mol | Downcomer | 0.09 |
| C3 propylene; C6 1-hexene | | |

Properties of the obtained material has been reported in table 2:

Table 2

| | | Ex 1 |
|---|---|---|
| MFR 5 Kg/230°C | g/10min | 1.15 |
| C6-NMR | wt% | 3.3 |
| xylene soluble 25°C | wt% | 3.4 |
| Polydispersity index | nr | 5.2 |

**Component A2 comparative**

component A2 is a propylene ethylene 1-hexene terpolymer whose features are reported in Table 3.

Table 3

| | | |
|---|---|---|
| ethylene | wt% | 1.8 |

(continued)

| | | |
|---|---|---|
| 1-hexene | wt% | 2.7 |
| MFR 5 Kg/230°C | g/10min | 1.2 |
| X.S. | % | 7,7 |
| MEF | MPa | **850** |
| **IZOD -20°C** | kJ/m2 | **4,4** |
| Tm | °C | 136,1 |

Component B)

Components B) is an heterophasic copolymer obtained by sequential gas phase polymerization, the features of the copolymer are reported on table 4

Table 4

| Component | | B |
|---|---|---|
| Component b1 | | |
| Split | %wt | 32 |
| C2 | %wt | 3.2 |
| Xylene solubles at 25°C | %wt | <6.5 |
| Component b2 | | |
| Split | %wt | 68 |
| C2 | %wt | 27.0 |
| intrinsic viscosity of the xylene soluble fraction at 25°C | wt% | 3.2 |
| * C2= ethylene derived units | | |

Components A and B have been blended together the resulting blend has been analysed. The results have been reported on table 5

Table 5

| blend | | 1 | comparative blend 2 |
|---|---|---|---|
| Component B | | | |
| Split* | wt% | 4 | 4 |
| MFR | g/10min | 1.2 | 1.25 |
| xylene solubles 25°C | % | 9.5 | 6.3 |
| flexural modulus | MPa | 1140 | 820 |
| Melting point | °C | 145.1 | 136.1 |
| IZOD -20°C | $kJ/m^2$ | 3.5 | 3.7 |
| *The remaining amount being component A | | | |

Pipes obtained with composition 1 and comparative blend 2 have been tested with a test based on the European Standard EN ISO1167Thermoplastics pipes, fittings and assemblies for the conveyance of fluids - Determination of the resistance to internal pressure) the results are reported on table 6

Table 6

| 20°C | Hoop Stress MPa | Time h | Hoop Stress MPa | Time h |
|---|---|---|---|---|
| C1 | 16.46 | 60 | 14.67 | 1270 |
| 1 | 15.99 | 5087 | 14.68 | 5568 (on test) |
| | | | | |
| 95°C | Hoop Stress MPa | Time h | | |
| C1 | 4.97 | 6.0 | | |
| 1 | 5.0 | 5568 on test | | |
| | | | | |
| 110°C | Hoop Stress MPa | Time h | | |
| C1 | 4.02 | 0.1 | | |
| 1 | 3.92 | 5571 on test | | |

From table 6 clearly results that pipes obtained with the composition according to the invention 1 have an improved resistance even at high temperature and high pressure with respect to pipes obtained by using the composition of the comparative blend 2.

## Claims

1. A polyolefin composition comprising:

    A) from 85.0 wt% to 99.5 wt%; of a propylene 1-hexene copolymer wherein:

        (i) the content of 1-hexene derived units ranges from 0.6 wt% to 6.0 wt% ;
        ii) the melt flow rate (MFR) (ISO 1133 230°C, 5 kg) ranges from 0.6 to 5.0 g/10 min;
        iii) the xylene soluble content measured at 25°C lower than 10 wt%;

    B) from 0.5 wt% to 15.0 wt%; of a propylene, ethylene copolymer composition comprising:

        b1) from 12 wt% to 52 wt%; of a propylene homopolymer or a propylene/ethylene copolymer having a content of ethylene derived units ranging from 0.1 wt% to 4.5 wt%; and having a xylene soluble content measured at 25°C lower than 10 wt%;
        b2) from 48 wt% to 88 wt% of a propylene ethylene copolymer having a content of ethylene derived units ranging from 15.0 wt% to wt% to 42.0 wt%;
        wherein the resulting polyolefin composition has an melt flow rate (230°C/5 kg.. ISO 1133) ranging from 0.2 g/10min to 4.0 g/10min; the sum A+B being 100 and the sum b1+b2 being 100;
        wherein the term copolymer means that the polymer contains only two type of monomers.

2. The polyolefin composition according to claim 1 wherein the content of 1-hexene derived units in component A) ranges from 1.0 wt% to 4.5 wt%.

3. The polyolefin composition according to any of claims 1-2 wherein the content of 1-hexene derived units in component A) ranges from 2.5 wt% to 3.9 wt%.

4. The polyolefin composition according to any of claims 1-3 wherein the content of 1-hexene derived units in component A) ranges from 2.8 wt% to 3.7wt%.

5. The polyolefin composition according to any of claims 1-4 wherein component b2) is a propylene ethylene copolymer having an content of ethylene derived units ranging from 18 wt% to 38 wt% said copolymer having an intrinsic viscosity of the xylene soluble fraction at 25°C ranging from 2.0 dl/g to 5.0 dl/g.

**6.** The polyolefin composition according to any of claims 1-5 wherein the melt flow rate (MFR) (ISO 1133 230°C, 5 kg) of component A) ranges from 0.9 to 2.5 g/10 min.

**7.** The polyolefin composition according to any of claims 1-6 wherein in component A) the melting temperature (DSC) ranges from 155° C to 130° Cthe melt flow rate (MFR) (ISO 1133 230°C, 5 kg) of component A) ranges from 0.9 to 2.5 g/10 min.

**8.** The polyolefin composition according to any of claims 1-7 having a melt flow rate (230°C/5 kg.. ISO 1133) ranging from 0.4 g/10min to 3.0 g/10min;

**9.** Pipe systems and sheets comprising a polyolefin composition according to claims 1 to 8.

**10.** Mono- or multilayer pipes and sheets wherein at least one layer comprises the polyolefin composition according to claim 1

**Patentansprüche**

**1.** Polyolefinzusammensetzung, umfassend:

A) 85,0 Gew.% bis 99,5 Gew.% eines Propylen/1-Hexen-Copolymers, wobei:

i) der Gehalt an von 1-Hexen abgeleiteten Einheiten im Bereich von 0,6 Gew.% bis 6,0 Gew.% liegt;
ii) die Schmelzflussrate (MFR) (ISO 1133, 230 °C, 5 kg) im Bereich von 0,6 bis 5,0 g/10 min liegt;
iii) der Gehalt an xylollöslichem Material, gemessen bei 25 °C, unter 10 Gew.% liegt;

B) 0,5 Gew.% bis 15,0 Gew.% einer Propylen/Ethylen-Copolymerzusammensetzung, umfassend:

b1) 12 Gew.% bis 52 Gew.% eines Propylenhomopolymers oder eines Propylen/Ethylen-Copolymers mit einem Gehalt an von Ethylen abgeleiteten Einheiten im Bereich von 0,1 Gew.% bis 4,5 Gew.% und mit einem bei 25 °C gemessenen Gehalt an in Xylol löslichem Material unter 10 Gew.%;
b2) 48 Gew.% bis 88 Gew.% eines Propylen/Ethylen-Copolymers mit einem Gehalt an von Ethylen abgeleiteten Einheiten im Bereich von 15,0 Gew.% bis 42,0 Gew.%;
wobei die resultierende Polyolefinzusammensetzung eine Schmelzflussrate (230 °C/5 kg gemäß ISO 1133) im Bereich von 0,2 g/10 min bis 4,0 g/10 min hat; wobei die Summe aus A+B 100 ist und die Summe aus bl+b2 100 beträgt;
wobei der Begriff Copolymer bedeutet, dass das Polymer nur zwei Typen von Monomeren enthält.

**2.** Polyolefinzusammensetzung nach Anspruch 1, wobei der Gehalt an von 1-Hexen abgeleiteten Einheiten in Komponente A) im Bereich von 1,0 Gew.% bis 4,5 Gew.% liegt.

**3.** Polyolefinzusammensetzung nach einem der Ansprüche 1 bis 2, wobei der Gehalt an von 1-Hexen abgeleiteten Einheiten in Komponente A) im Bereich von 2,5 Gew.% bis 3,9 Gew.% liegt.

**4.** Polyolefinzusammensetzung nach einem der Ansprüche 1 bis 3, wobei der Gehalt an von 1-Hexen abgeleiteten Einheiten in Komponente A) im Bereich von 2,8 Gew.% bis 3,7 Gew.% liegt.

**5.** Polyolefinzusammensetzung nach einem der Ansprüche 1 bis 4, wobei Komponente b2) ein Propylen/Ethylen-Copolymer mit einem Gehalt an von Ethylen abgeleiteten Einheiten im Bereich von 18 Gew.% bis 38 Gew.% ist, wobei das Copolymer eine Grenzviskosität der bei 25 °C in Xylol löslichen Fraktion im Bereich von 2,0 dl/g bis 5,0 dl/g aufweist.

**6.** Polyolefinzusammensetzung nach einem der Ansprüche 1 bis 5, wobei die Schmelzflussrate (MFR) (ISO 1133, 230 °C, 5 kg) von Komponente A) im Bereich von 0,9 bis 2,5 g/10 min liegt.

**7.** Polyolefinzusammensetzung nach einem der Ansprüche 1 bis 6, wobei in Komponente A) die Schmelztemperatur (DSC) im Bereich von 155 °C bis 130 °C liegt und die Schmelzflussrate (MFR) (ISO 1133, 230 °C, 5 kg) von Komponente A) im Bereich von 0,9 bis 2,5 g/10 min liegt.

**8.** Polyolefinzusammensetzung nach einem der Ansprüche 1 bis 7 mit einer Schmelzflussrate (230 °C/5 kg; ISO 1133) im Bereich von 0,4 g/10 min bis 3,0 g/10 min.

**9.** Rohrsystem und Lagen, die eine Polyolefinzusammensetzung nach den Ansprüchen 1 bis 8 umfassen.

**10.** Ein- oder mehrschichtige Rohre und Lagen, wobei mindestens eine Schicht die Polyolefinzusammensetzung nach Anspruch 1 umfasst.

## Revendications

**1.** Composition polyoléfinique comprenant :

A) 85,0% en poids à 99,5% en poids d'un copolymère de propylène et de 1-hexène :

(i) la teneur en motifs dérivés de 1-hexène étant située dans la plage de 0,6% en poids à 6,0% en poids ;
ii) l'indice de fluidité à chaud (MFR) (ISO 1133, 230°C, 5 kg) étant situé dans la plage de 0,6 à 5,0 g/10 min ;
iii) la teneur en solubles dans le xylène, mesurée à 25°C, étant inférieure à 10% en poids ;

B) 0,5% en poids à 15,0% en poids d'une composition de copolymère de propylène et d'éthylène comprenant :

b1) 12% en poids à 52% en poids d'un homopolymère de propylène ou d'un copolymère propylène/éthylène présentant une teneur en motifs dérivés d'éthylène située dans la plage de 0,1% en poids à 4,5% en poids ; et présentant une teneur en solubles dans le xylène, mesurée à 25°C, inférieure à 10% en poids ;
b2) 48% en poids à 88% en poids d'un copolymère de propylène et d'éthylène présentant une teneur en motifs dérivés d'éthylène située dans la plage de 15,0% en poids à 42,0% en poids ;
la composition polyoléfinique résultante présentant un indice de fluidité à chaud (230°C/5 kg, ISO 1133) situé dans la plage de 0,2 g/10 min à 4,0 g/10 min ; la somme A + B valant 100 et la somme b1 + b2 valant 100 ; le terme copolymère signifiant que le polymère ne contient que deux types de monomères.

**2.** Composition polyoléfinique selon la revendication 1 où, dans le constituant A), la teneur en motifs dérivés de 1-hexène est située dans la plage de 1,0% en poids à 4,5% en poids.

**3.** Composition polyoléfinique selon l'une quelconque des revendications 1 à 2 où, dans le constituant A), la teneur en motifs dérivés de 1-hexène est située dans la plage de 2,5% en poids à 3,9% en poids.

**4.** Composition polyoléfinique selon l'une quelconque des revendications 1 à 3 où, dans le constituant A), la teneur en motifs dérivés de 1-hexène est située dans la plage de 2,8% en poids à 3,7% en poids.

**5.** Composition polyoléfinique selon l'une quelconque des revendications 1 à 4, le constituant b2) étant un copolymère de propylène et d'éthylène présentant une teneur en motifs dérivés d'éthylène située dans la plage de 18% en poids à 38% en poids, ledit copolymère présentant une viscosité intrinsèque de la fraction soluble dans le xylène à 25°C située dans la plage de 2,0 dl/g à 5,0 dl/g.

**6.** Composition polyoléfinique selon l'une quelconque des revendications 1 à 5, l'indice de fluidité à chaud (MFR) (ISO 1133, 230°C, 5 kg) du constituant A) étant situé dans la plage de 0,9 à 2,5 g/10 min.

**7.** Composition polyoléfinique selon l'une quelconque des revendications 1 à 6 où, dans le constituant A), la température de fusion (DSC - calorimétrie différentielle à balayage) est située dans la plage de 155°C à 130°C, l'indice de fluidité à chaud (MFR) (ISO 1133, 230°C, 5 kg) du constituant A) est situé dans la plage de 0,9 à 2,5 g/10 min.

**8.** Composition polyoléfinique selon l'une quelconque des revendications 1 à 7, présentant un indice de fluidité à chaud (230°C/5 kg, ISO 1133) situé dans la plage de 0,4 g/10 min à 3,0 g/10 min.

**9.** Systèmes de tuyau et feuilles comprenant une composition polyoléfinique selon les revendications 1 à 8.

**10.** Tuyaux et feuilles monocouches ou multicouches, au moins une couche comprenant la composition polyoléfinique selon la revendication 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2013083617 A
- US 4399054 A
- EP 45977 A
- US 4472524 A
- EP 361493 A
- EP 728769 A
- EP 1012195 A

### Non-patent literature cited in the description

- **C. J. CARMAN ; R. A. HARRINGTON ; C. E. WILKES.** Monomer Sequence Distribution in Ethylene-Propylene Rubber Measured by 13C NMR. 3. Use of Reaction Probability Mode. *Macromolecules,* 1977, vol. 10, 536
- **M. KAKUGO ; Y. NAITO ; K. MIZUNUMA ; T. MIYATAKE.** Carbon-13 NMR determination of monomer sequence distribution in ethylene-propylene copolymers prepared with δ-titanium trichloride-diethylaluminum chloride. *Macromolecules,* 1982, vol. 15, 1150